Europäisches Patentamt

European Patent Office

Office européen des brevets

(19)

(11) Numéro de publication : **0 117 963**
**B1**

(12) **FASCICULE DE BREVET EUROPÉEN**

(45) Date de publication du fascicule du brevet :
28.06.89

(51) Int. Cl.⁴ : **A 61 C 13/30**, A 61 C 9/00

(21) Numéro de dépôt : 83430041.0

(22) Date de dépôt : 23.12.83

(54) Tête de pivot radiculaire comportant un moyen de rétention réversible et de positionnement automatique.

(30) Priorité : 29.12.82 FR 8222203

(43) Date de publication de la demande :
12.09.84 Bulletin 84/37

(45) Mention de la délivrance du brevet :
28.06.89 Bulletin 89/26

(84) Etats contractants désignés :
AT BE CH DE GB IT LI LU NL SE

(56) Documents cités :
EP–A– 0 075 525
FR–A– 1 463 860
FR–A– 1 538 440

(73) Titulaire : **Malek, Pierre**
**62, Bd Gambetta**
**F-06000 Nice (FR)**

(72) Inventeur : **Malek, Pierre**
**62, Bd Gambetta**
**F-06000 Nice (FR)**

(74) Mandataire : **Karmin, Roger et al**
**Cabinet MONNIER 150, cours Lafayette**
**F-69003 Lyon (FR)**

Jouve, 18, rue St-Denis, 75001 Paris, France

## Description

L'invention a pour objet une combinaison d'un point avec une empreinte élastique comme indiquée dans la première partie de la revendication 1.

Actuellement, l'état de la technique est le suivant : la majorité des têtes de pivots radiculaires ou tenons comportent une partie rétentive. Cette partie rétentive doit être le plus efficace possible ; elle a, en effet, pour fonction, une fois que la racine est préparée, que le pivot intra-radiculaire est en place, de permettre lorsque l'on prend une empreinte en bouche, de retirer les pivots radiculaires qui restent par leur partie rétentive maintenue dans l'empreinte de la bouche ou négatif. Même si les pivots radiculaires restent dans l'empreinte et se dégagent donc de leur racine, cette manipulation technique n'évite pas que lesdits pivots aient pu être légèrement déplacés : de plus, il arrive fréquemment, que les pivots restent en place lors de la prise d'empreinte en bouche. En effet, la surface de contact de la partie intra-radiculaire du pivot dans la racine de la dent est grande, d'où une grande force de retenue, tandis que la tête du pivot est relativement petite quant à sa surface de contact dans l'empreinte.

De manière à bien récupérer les pivots lors de la prise d'empreinte en bouche, les constructeurs de pivots ont développé l'efficacité de la partie rétentive de la tête radiculaire ; il existe donc des têtes écrasées, des têtes à ailettes, des têtes fendues, des têtes à collerettes ; ces différentes têtes forment un véritable ancrage dans la pâte. Si par malheur, la tête d'un pivot radiculaire de ce type existant ne vient pas au moment de la prise d'empreinte en bouche, il est quasiment impossible de replacer la tête dudit pivot dans l'empreinte.

Du fait de la configuration de sa tête, écrasement, ailettes, collerettes, le pivot est orienté angulairement par rapport à son axe longitudinal. Il est impossible de retrouver dans quelles positions étaient les ailettes. De plus, la pâte à empreinte a été arrachée partiellement à ce niveau. De nombreux praticiens portent, avant la prise d'empreinte, un index sur la pâte ou sur le pivot radiculaire lui-même pour retrouver l'orientation dans le cas où celui-ci resterait en bouche. Il a même été décrit des supports de pivot ou transferts préfabriqués, qui sont des pièces supplémentaires qui permettent : de fixer automatiquement ledit pivot lors de la prise d'empreinte, de pouvoir repérer sa place exacte lors des manipulations, grâce à son indexation, de supprimer l'erreur de positionnement du pivot et de maintenir celui-ci lors des prises d'empreintes. Il s'agit en fait d'un ressort métallique ou tube fendu qui vient s'emboîter sur la tête du pivot ; voir le brevet FR-1 463 860 NARBONI.

On connaît aussi par le brevet français FR-A-1 538 440, un procédé de repérage consistant à utiliser un pivot qui s'engage dans le trou de la racine et dépasse à l'extérieur de celle-ci pour recevoir un moulage de pâte dentaire et à prévoir un dispositif de repérage constitué d'un élément mâle engagé dans la pâte dentaire et qui reçoit après prise de celle-ci un organe femelle. Un tel procédé est complexe à mettre en œuvre et comporte un nombre élevé d'opérations, ce qui rend l'intervention très longue.

Tous ces inconvénients sont surmontés par la présente invention, qui concerne la combinaison d'un pivot radiculaire muni d'une tête cylindrique avec une empreinte élastique réalisée sous la forme d'une pâte dentaire et munie d'un logement pour recevoir ladite tête du pivot, ledit pivot comprenant une partie conique pour entrer dans le trou de la racine d'une dent, ladite tête s'étendant à partir de la partie conique de façon à émerger de ladite racine, ladite combinaison étant caractérisée en ce que ladite tête cylindrique du pivot est pourvue d'au moins une gorge de retenue circulaire continue et en ce que le logement de l'empreinte présente au moins un anneau élastique dont la forme lui permet de pénétrer élastiquement dans la gorge du pivot, de telle sorte que lors d'une prise d'empreinte, soit le pivot et l'empreinte sont extraits ensemble soit si l'empreinte est retirée de la tête cylindrique, l'empreinte peut être replacée sur cette dernière sans endommager l'empreinte et sans se préoccuper de l'orientation angulaire du pivot par rapport audit logement. La tête de pivot radiculaire comporte, au moins, une gorge uniforme circulaire continue. Le nombre de gorges ainsi que la forme des parois ou des bords et/ou du fond de la gorge est fonction des caractéristiques de la pâte dentaire. La pâte dentaire doit pénétrer dans la gorge circulaire où elle forme un anneau de pâte qui fait office de clips et qui vient verrouiller la tête dudit pivot dans l'empreinte et ce, de manière réversible du fait de la continuité de la gorge uniforme circulaire, la tête du pivot radiculaire n'est pas orientée selon un angle angulaire par rapport à l'axe longitudinal. En fonction des caractéristiques techniques de la pâte dentaire utilisée, la forme de la gorge peut varier, ainsi le fond de la gorge peut être plat ou en forme de cuvette ; de plus, les bords de la gorge peuvent former avec ledit fond un angle plus ou moins ouvert qui peut aller de 90° à plus de 130°, les angles desdits bords ou parois peuvent ne pas être identiques selon qu'il s'agit du bord qui se trouve près du sommet de la tête ou selon qu'il s'agit du bord de la gorge qui se trouve vers l'extrémité intra radiculaire du pivot.

Le sommet de la tête du pivot radiculaire peut être conique, tronconique, rond, arrondi, sphérique, hémisphérique ou plat. Selon une réalisation préférée de l'invention, le sommet de la tête du pivot radiculaire est tronconique de manière d'une part à permettre l'éjection ou l'échappement des sérosités et mucosités sur les côtés et d'autre part, à former avec l'empreinte des bords de la gorge, selon des angles choisis et parallèles, un logement de prépositionnement facilitant le positionnement ou le repositionnement automatique de la tête du pivot dans l'empreinte.

Les figures ci-jointes données à titre d'exemple indicatif et non limitatif permettront aisément de comprendre l'invention ; elles représentent un mode de réalisation préféré selon l'invention.

Fig. 1 est une vue schématique vue de côté du pivot radiculaire en place dans la pâte dentaire, avec une vue en coupe du logement.

Fig. 2 est une vue schématique vue de côté du pivot radiculaire en place dans la pâte dentaire, avec une vue en coupe du logement avant la mise en place dans la pâte dentaire au niveau de l'avant trou.

Fig. 3 est une vue schématique vue de côté du pivot radiculaire après la sortie de la pâte dentaire au niveau de l'avant trou.

Fig. 4 est une vue schématique vue de côté du pivot radiculaire en place dans la pâte dentaire, avec une vue en coupe du logement.

Cette vue met en évidence le fait que l'entrée ou la sortie du pivot ne déforme pas la pâte dentaire.

Fig. 5 est une vue de côté du pivot radiculaire avec deux gorges ou rainures.

Fig. 6 est une vue de côté du pivot radiculaire avec trois gorges ou rainures.

Fig. 7 est une vue de côté du pivot radiculaire avec quatre gorges ou rainures.

Fig. 8 est une vue de côté du pivot radiculaire avec dix gorges ou rainures.

Fig. 9 est une vue de détail de côté du sommet de la tête du pivot radiculaire qui a une forme conique.

Fig. 10 est une vue de détail vue de côté du sommet de la tête du pivot radiculaire qui a une forme arrondie.

Fig. 11 est une vue de détail vue de côté du sommet de la tête du pivot radiculaire qui a une forme plate.

Fig. 12 représente une vue en coupe et en détail de la tête du pivot mettant en évidence, notamment, le fond de la gorge ainsi que les angles des bords de ladite gorge.

Le pivot radiculaire est mis en place dans la racine de la dent par sa partie conique 1 qui se termine par l'extrémité intra radiculaire 2 du pivot.

Au niveau de la partie cylindrique qui est la tête 3 du pivot radiculaire est disposée une gorge ou rainure 4 ; cette gorge 4 est un moyen de rétention doux qui permet à la pâte dentaire 5 de venir faire office de clips en formant un anneau de pâte 6 dans ladite gorge ou rainure 4.

On comprend donc que, lors d'une prise d'empreinte, si le ou les pivots ne viennent pas avec l'empreinte de la bouche ou négatif, cela importe peu si l'utilisateur a mis en place des pivots selon l'invention.

L'utilisateur récupère lesdits pivots sans s'occuper de leur orientation, sans porter un index ; il lui suffit de présenter le pivot devant l'avant trou correspondant 8, de l'empreinte de la bouche, et d'enfoncer le pivot jusqu'à ce qu'il sente au toucher un « déclic » signifiant que ledit pivot est parfaitement en place.

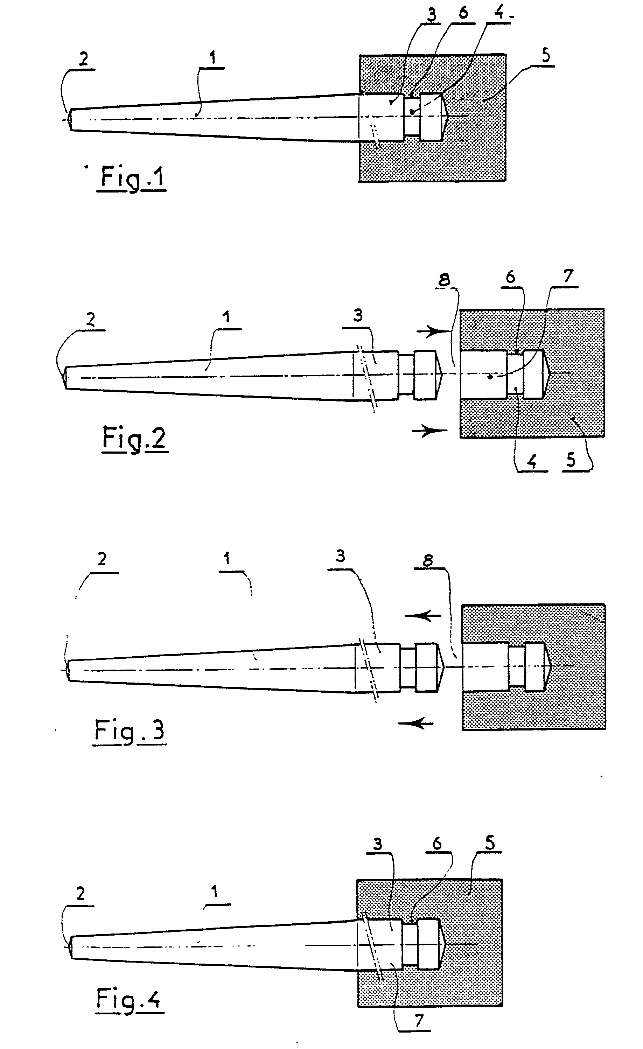

Comme on peut le voir sur la fig. 3, le fait que le pivot soit resté en place dans la racine de la dent, n'a pas détérioré la pâte dentaire 5.

La tête 3 du pivot radiculaire comporte un moyen de rétention qui est doux, elle n'emporte pas la pâte dentaire 5 en sortant de son logement 7, et ne la détériore pas, comme c'est le cas, par contre, pour les pivots actuels. Le positionnement est, de plus, automatique ; il suffit, comme indiqué dans la fig. 2, de présenter devant son avant trou 8 le pivot radiculaire par sa tête 3 et de l'enfoncer jusqu'à ce que l'utilisateur sente au toucher un « déclic ». Du fait de la configuration de la tête 3 du pivot radiculaire, l'utilisateur n'a pas à se préoccuper de l'orientation angulaire du pivot par rapport à son logement 7, ainsi que de la profondeur d'enfoncement dans le logement 7, du fait de la ou des gorges, il sait si ledit pivot est en place dans son logement 7, ou pas.

Ceci est impossible avec les pivots actuels qui ont une tête très rétentive, traumatisante pour la pâte, et assymétrique du fait des moyens de rétention, ailettes ou analogues, et que l'on doit munir ou marquer d'un index pour repérer la position adéquate.

Le pivot selon l'invention supprime donc tout risque d'erreur dans le positionnement et le repositionnement, sans détérioration de l'empreinte, et ce, au cours de manipulations techniques des prises d'empreintes en bouche ou au laboratoire.

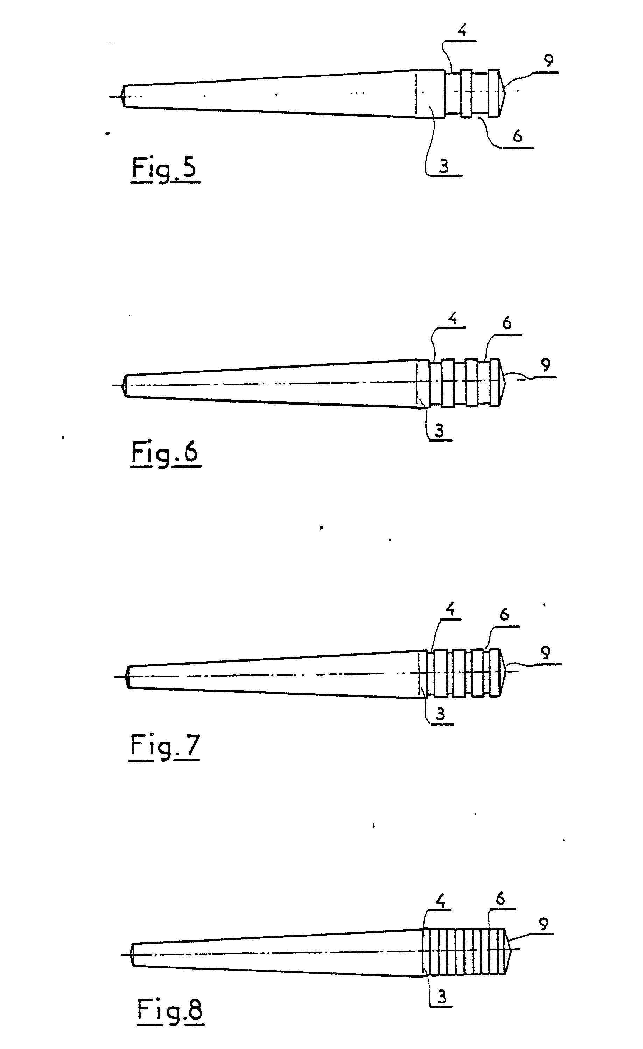

Les fig. 5, 6, 7 et 8 représentent des têtes 3 de pivot radiculaire qui comportent deux ou plusieurs gorges 4 uniformes, circulaires, continues qui vont former des anneaux de pâte 6, qui vont venir faire office de clips. Ces différentes têtes de pivot conservent les mêmes caractéristiques techniques, mais la présence d'une ou de plusieurs gorges 4 est retenue en fonction de la pâte dentaire utilisée, qui peut être plus ou moins souple.

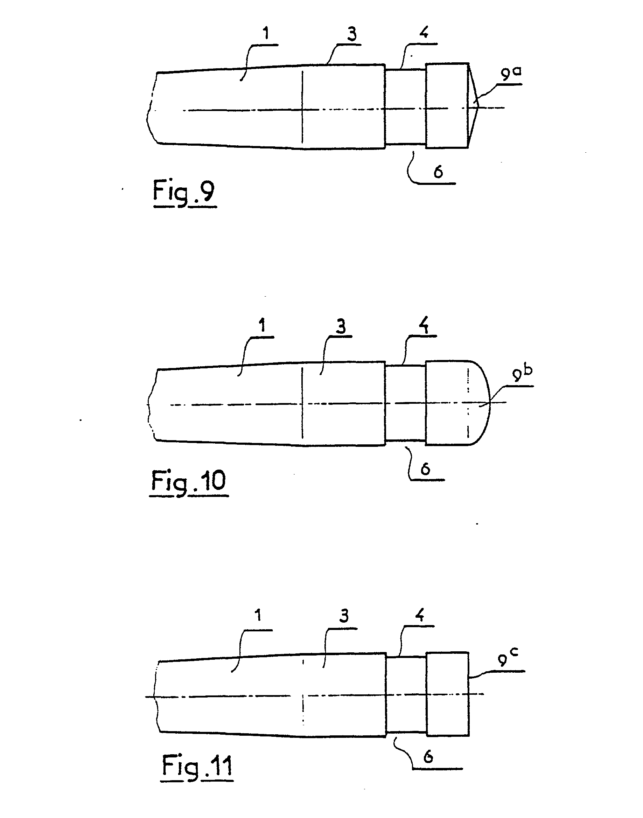

Les fig. 9, 10 et 11, représentent les sommets 9 des têtes de pivot radiculaire. Le sommet 9a est conique, le sommet 9b est arrondi, le sommet 9c est plat.

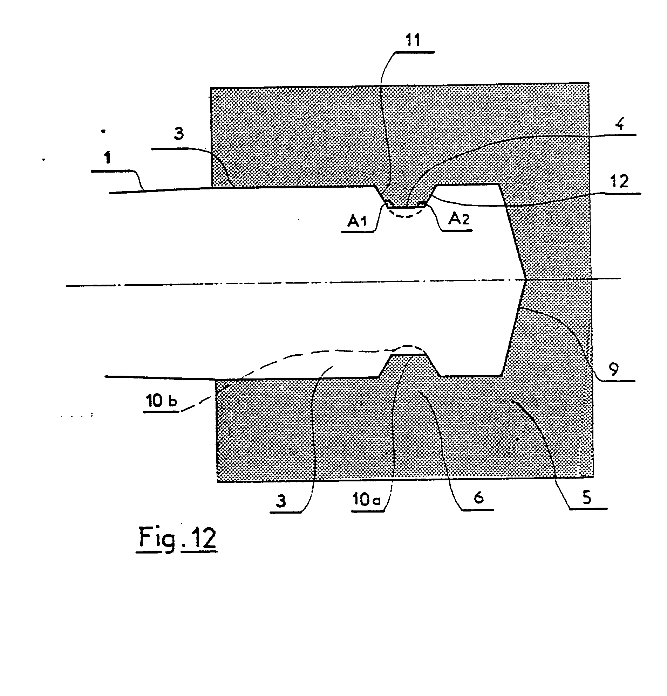

En fonction des caractéristiques techniques de la pâte dentaire 5 utilisée, la forme de la gorge 4 peut varier, ainsi le fond 10 de la gorge 4 peut être plat 10a ou en forme de cuvette 10b, voir la fig. 12 ; de plus, les bords 11 et 12 de la gorge 4 peuvent former avec ledit fond 10 (10a ou 10b) un angle A1 et A2 plus ou moins ouvert qui peut aller de 90° à plus de 130°, les angles A1 et A2 desdits bords 11 et 12 peuvent ne pas être identiques selon qu'il s'agit du bord 12 qui se trouve près du sommet 9 de la tête 3 ou selon qu'il s'agit du bord 11 qui se trouve vers l'extrémité intra radiculaire 2 du pivot 1.

**Revendications**

1. Combinaison d'un pivot radiculaire muni d'une tête cylindrique avec une empreinte élastique (5) réalisée sous la forme d'une pâte dentaire et munie d'un logement pour recevoir ladite tête du pivot, ledit pivot comprenant une partie conique (1) pour entrer dans le trou de la racine d'une dent ladite tête s'étendant à partir de la partie conique de façon à émerger de ladite racine, caractérisée en ce que ladite tête cylindrique du pivot est pourvue d'au moins une gorge de retenue (4) circulaire continue et en ce que le logement de l'empreinte (5) présente au moins un anneau élastique (6) dont la forme lui permet de pénétrer élastiquement dans la gorge (4) du pivot, de telle sorte que lors d'une prise d'empreinte, soit le pivot et l'empreinte (5) sont extraits ensemble, soit l'empreinte (5) est séparée de la tête cylindrique, auquel cas l'empreinte (5) peut être replacée sur cette dernière sans endommager l'empreinte (5) et sans se préoccuper de l'orientation angulaire du pivot par rapport audit logement.

2. Combinaison suivant la revendication 1, caractérisée en ce que les bords (11) et (12) de la gorge circulaire (4) du pivot forment avec son fond plat (10a) un angle (A1, A2) variant de 90° à plus de 130°.

3. Combinaison suivant la revendication 2, caractérisé en ce que le fond de la gorge circulaire (4) du pivot est en forme de cuvette (10b).

4. Combinaison suivant l'une quelconque des revendications 2 et 3, caractérisée en ce que les angles (A1, A2) des bords (11, 12) ne sont pas identiques selon qu'il s'agisse soit du bord (12) qui se trouve près du sommet (9) de la partie cylindrique (3) du pivot, soit du bord (11) qui se trouve vers l'extrémité radiculaire (2) du pivot.

## Claims

1. Combination of a radicular pin equipped with a cylindrical head with an elastic impression (5) produced in the form of a dental paste and provided with a receptacle for receiving the said head of the pin, the said pin possessing a conical part (1) for entering the hole in the root of a tooth, the said head extending from the conical part so as to emerge from the said root, characterized in that the said cylindrical head of the pin is equipped with at least one continuous circular retaining groove (4), and in that the receptacle of the impression (5) has at least one elastic ring (6), the form of which allows it to penetrate elastically into the groove (4) of the pin, in such a way that, when an impression is taken, either the pin and the impression (5) are extracted together, or the impression (5) is separated from the cylindrical head, in which case the impression (5) can be replaced on the latter without damage to the impression (5) and without the need for angular orientation of the pin relative to the said receptacle.

2. Combination according to Claim 1, characterized in that the edges (11) and (12) of the circular groove (4) of the pin form with its flat bottom (10a) an angle (A1, A2) varying from 90° to more than 130°.

3. Combination according to Claim 2, characterized in that the bottom of the circular groove (4) of the pin is cup-shaped (10b).

4. Combination according to either one of Claims 2 and 3, characterized in that the angles (A1, A2) of the edges (11, 12) are not identical in respect of either the edge (12) located near the apex (9) of the cylindrical part (3) of the pin or the edge (11) located towards the radicular end (2) of the pin.

## Patentansprüche

1. Kombination eines Wurzelstiftes mit zylindrischem Kopf und einem elastischen Abdruck (5), der mittels einer Dentalmasse realisiert ist und mit einer Lagerung zur Aufnahme des Kopfes des Stiftes versehen ist, wobei der Wurzelstift einen konischen Teil (1) zum Einsetzen in das Wurzelloch eines Zahnes aufweist und der Kopf sich von dem konischen Teil ab erstreckt, derart, daß er aus der Wurzel austritt, dadurch gekennzeichnet, daß der zylindrische Kopf des Stiftes mit mindestens einer ringförmigen, durchgehenden Haltenut (4) versehen ist und die Lagerung des Abdruckes (5) mindestens einen elastischen Ring (6) aufweist, dessen Form ein elastisches Eintreten in die Nut (4) des Stiftes erlaubt, derart, daß beim Abnehmen eines Abdrucks entweder der Stift und der Abdruck (5) zusammen herausgenommen werden oder der Abdruck von dem zylindrischen Kopf getrennt wird, wobei im letzteren Fall der Abdruck (5) ohne Beschädigung desselben und ohne Berücksichtigung der Winkelausrichtung des Stiftes relativ zur Lagerung wieder auf den zylindrischen Kopf aufgesetzt werden kann.

2. Kombination nach Anspruch 1, dadurch gekennzeichnet, daß die Seitenwände (11, 12) der ringförmigen Nut (4) des Stiftes mit dem Nutgrund (10a) einen Winkel (A1, A2) bilden, der von 90° bis mehr als 130° variiert.

3. Kombination nach Anspruch 2, dadurch gekennzeichnet, daß der Nutgrund des Stiftes die Form einer Mulde oder Napfes (10b) aufweist.

4. Kombination nach Anspruch 2 oder 3, dadurch gekennzeichnet, daß die Winkel (A1, A2) der Seitenwände (11, 12) nicht identisch sind, sei es, daß es sich um die Seitenwand (12), die sich nahe der Spitze (9) des zylindrischen Teils (3) des Stiftes oder um die Seitenwand (11) handelt, die sich zum Wurzelende (2) des Stiftes hin befindet.

EP 0 117 963 B1

Fig.1

Fig.2

Fig.3

Fig.4

Fig.5

Fig.6

Fig.7

Fig.8

Fig.9

Fig.10

Fig.11

Fig. 12